# FASCICULE DE BREVET EUROPEEN

(11) **EP 3 099 853 B1**
(45) Date de publication et mention de la délivrance du brevet: **11.09.2019**
(21) Numéro de dépôt: 15704064.3
(22) Date de dépôt: 22.01.2015
(51) Int. Cl.: D06N 5/00, E04D 3/34, E04D 5/02

(54) **PROCEDE DE REALISATION D'UN ELEMENT DE COUVERTURE EN FIBRES IMPREGNE DE BITUME A COMPORTEMENT AU FEU AMELIORE**
VERFAHREN ZUR HERSTELLUNG EINES ABDECKUNGSELEMENTS AUS MIT BITUMEN IMPRÄGNIERTEN FASERN MIT VERBESSERTEN FEUERBESTÄNDIGKEITSEIGENSCHAFTEN
METHOD FOR PRODUCING A COVERING ELEMENT MADE FROM FIBRES IMPREGNATED WITH BITUMEN HAVING IMPROVED FIRE PROPERTIES

(30) Priorité: 28.01.2014 FR 1400213
(43) Date de publication de la demande: 07.12.2016
(73) Titulaire: Onduline, 92150 Suresnes (FR)
(72) Inventeur: TOKDEMIR, Eyup, 41000 Izmit (TR); SAKIOGLU, Ethem, 34775 Istanbul (TR)
(74) Mandataire: Jacobacci Coralis Harle
(86) Numéro de dépôt international: PCT/FR2015/050159
(87) Numéro de publication internationale: WO 2015/114239

(56) Documents cités:
- EP-A1- 2 617 894
- EP-A1- 2 634 306
- FR-A1- 2 372 927
- FR-A1- 2 372 927
- US-A- 5 173 515
- US-A1- 2014 013 693

## Description

La présente invention concerne un procédé de réalisation d'un élément de couverture de toiture en fibres, notamment de cellulose, imprégné de bitume qui a un comportement au feu amélioré, un dispositif pour la mise en oeuvre du procédé ainsi qu'une composition utilisable à cette fin. Elle a des applications dans le domaine de la fabrication des éléments de construction et notamment des éléments de couverture, notamment plaques ondulées ou autres éléments de couverture dont ceux couvrant des lignes ou points singuliers des toitures.

Les éléments de couverture en fibres de cellulose imprégnés de bitume sont utilisés depuis de nombreuses années. Afin d'améliorer leur comportement au feu, il a été proposé d'utiliser du graphite dans leur composition. En particulier, il a été proposé le répandage à sec : saupoudrage de particules de graphite sur une des deux faces opposées des éléments de couverture avec un moyen permettant aux dites particules de rester solidaires de ladite surface.

Les équipements nécessaires pour réaliser une telle opération sont complexes et d'un réglage délicat étant donné que les particules sont répandues, soit sur des éléments amenés à être conformés, soit sur des éléments déjà conformés, notamment des plaques ondulées, rendant difficile un répandage homogène sur toute la surface. De plus, ce sont des équipements spécifiques, dédiés au répandage des particules de graphite et qui peuvent être difficiles à installer au sein d'une chaine de fabrication déjà existante.

On connait le document FR2372927 qui décrit un procédé de fabrication de plaques ondulées bituminées difficilement combustibles dans lequel on coule ou pulvérise une composition aqueuse de formulation spécifique mais ne mentionnant pas le graphite. Le document EP2617894 décrit une plaque de couverture cellulosique bituminée résistant au feu et un procédé de fabrication dans lequel du graphite est déposé par voie sèche sur un matelas recouvert d'une couche de primaire de collage. Le document EP2634306 décrit une membrane de protection et son procédé de fabrication dans lequel la membrane est d'abord trempée dans du bitume puis reçoit des particules.

Il est ici proposé un procédé de répandage de graphite incorporé dans une composition liquide et un dispositif correspondant qui peuvent être facilement combinés à un procédé et un équipement existants d'une chaîne de fabrication d'éléments de couverture en fibres notamment de cellulose imprégnés de bitume. Il est plus spécifiquement proposé de les utiliser au sein d'un équipement destiné à la coloration de l'élément de couverture, soit au sein d'un équipement déjà existant, soit lors de l'installation d'une nouvelle chaine de fabrication d'éléments de couverture.

L'invention a ainsi pour objet un procédé de réalisation d'un élément de couverture en fibres imprégné de bitume comportant une étape d'enduction d'au moins une de deux faces d'un matelas de fibres, lesdites fibres étant au moins pour une partie d'entre elles des fibres naturelles, lesdites fibres naturelles étant notamment des fibres de cellulose, suivie d'une étape d'imprégnation par le bitume, l'enduction étant réalisée par une composition liquide comportant au moins une résine et/ou au moins un pigment.

Selon l'invention, on ajoute à la composition liquide un additif ayant des propriétés anti-feu et comportant au moins du graphite et un agent de refroidissement qui est de la colémanite.

Dans divers modes de mise en oeuvre de l'invention, les moyens suivants pouvant être utilisés seuls ou selon toutes les combinaisons techniquement possibles, sont employés :
- la composition liquide est une composition colorante comportant au moins un pigment et au moins une résine et on ajoute à la composition liquide un additif ayant des propriétés anti-feu et comportant au moins du graphite et un agent de refroidissement qui est de la colémanite,
- l'étape d'enduction du matelas de fibres s'effectue avant l'imprégnation par le bitume,
- les fibres sont toutes des fibres naturelles,
- les fibres naturelles comportent des fibres de cellulose,
- les fibres naturelles sont pratiquement toutes des fibres de cellulose,
- les fibres sont des fibres de cellulose,
- la cellulose provient de papiers et/ou cartons recyclés,
- la composition liquide est une composition colorante comportant au moins un pigment et au moins une résine,
- le matelas de fibres est un matelas plan/plat,
- l'additif anti-feu comporte seulement du graphite et de la colémanite,
- on met en oeuvre un additif anti-feu dans lequel l'agent de refroidissement est de la colémanite,
- la au moins une résine est choisie parmi : les résines époxydes, les résines polyuréthanes, les résines polyurées, les résines polyurée-formaldéhydes, les résines mélamines-formaldéhydes, les résines époxyvinylesters ou les résines vinylesters,
- le au moins un pigment est choisi parmi : les oxydes métalliques tels que l'oxyde de fer et l'oxyde de chrome,
- on met en oeuvre une composition liquide comportant l'additif anti-feu qui comporte au moins une résine choisie parmi : les résines époxydes, les résines polyuréthanes, les résines polyurées, les résines polyurée-formaldéhydes, les résines mélamines-formaldéhydes, les résines époxyvinylesters ou les résines vinylesters, et la composition liquide, dans le cas où elle est une composition colorante, comportant l'additif anti-feu comporte au moins un pigment choisi parmi : les oxydes métalliques tels que l'oxyde de fer et l'oxyde de chrome,
- on procède à l'enduction selon des modalités procédurales déterminées et avec des proportions déterminées des composés de la composition liquide afin d'obtenir un élément de couverture ayant des poids déterminés desdits composés,
- la quantité de résine représente de 0,5 à 3 % en poids de l'élément de couverture,
- la quantité de pigment représente de 0,5 à 3 % en poids de l'élément de couverture,
- la quantité d'agent de refroidissement représente de 1 à 7 % en poids de l'élément de couverture,
- la quantité d'agent de refroidissement représente de préférence de 2 à 5 % en poids de l'élément de couverture,
- la quantité de graphite représente de 1 à 7 % en poids de l'élément de couverture,
- la quantité de graphite représente de préférence de 2 à 5 % en poids de l'élément de couverture,
- la quantité de résine représente de 0,5 à 3 % en poids de l'élément de couverture, la quantité de pigment représente de 0,5 à 3 % en poids de l'élément de couverture, la quantité d'agent de refroidissement représente de 1 à 7 % en poids de l'élément de couverture, et la quantité de graphite représente de 1 à 7 % en poids de l'élément de couverture,
- le graphite est en flocons ou paillettes,
- le graphite en flocons ou paillettes a une gamme de taille choisie entre 70 Mesh et 220 Mesh, soit entre 210 mm et 62 mm,
- l'enduction du matelas avec la composition liquide comportant l'additif anti-feu est réalisée au rouleau,
- l'enduction du matelas est une enduction au rouleau de la composition liquide comportant l'additif anti-feu,
- l'enduction du matelas est une enduction au couteau ou racloir de la composition liquide comportant l'additif anti-feu,
- l'enduction du matelas est une enduction par pulvérisation de la composition liquide comportant l'additif anti-feu,
- la composition liquide comportant l'additif anti-feu destinée à être enduite sur le matelas est maintenue sous agitation constante par un agitateur,
- l'agitation constante de la composition liquide comportant l'additif anti-feu concerne la composition stockée dans un réservoir d'enduction dans lequel baigne/trempe le rouleau d'enduction,
- l'agitation constante de la composition liquide comportant l'additif anti-feu concerne la composition stockée dans un système de stockage et/ou de préparation de ladite composition distinct du réservoir d'enduction,
- l'agitateur est un agitateur vibratoire disposé sur la paroi du réservoir d'enduction, notamment à vibrations sonores ou ultrasonores,
- l'agitateur est un agitateur mécanique disposé au sein de la composition liquide,
- l'agitateur est choisi parmi les agitateurs à vis d'Archimède, à ruban hélicoïdal, ou tout autre type équivalent d'agitateur,
- le procédé comporte en outre une étape de séchage et de prise de la composition liquide comportant l'additif anti-feu qui a été enduite sur le matelas,
- le matelas de fibres est discontinu et correspond à des plaques de fibres,
- le matelas de fibres est continu, ledit matelas étant découpé en plaques dans une étape de segmentation postérieure à l'étape d'enduction et antérieure à l'étape d'imprégnation par le bitume, l'imprégnation par le bitume s'effectuant sur des plaques individuelles,
- le procédé comporte en outre une étape de conformation du matelas postérieurement à l'étape d'enduction et antérieurement à l'étape d'imprégnation par le bitume,
- l'étape de conformation est une étape de réalisation d'ondulations dans une ondulatrice à rouleaux,
- on met en oeuvre au moins un rouleau d'enduction et un réservoir d'enduction pour la composition liquide comportant l'additif anti-feu, ledit au moins un rouleau d'enduction baignant au sein du réservoir d'enduction dans ladite composition liquide comportant l'additif anti-feu et ledit réservoir d'enduction comporte ledit agitateur destiné à maintenir sous une agitation constante ladite composition comportant l'additif anti-feu.

La présente demande divulgue également un dispositif pour enduction d'un matelas de fibres, lesdites fibres étant au moins pour une partie d'entre elles des fibres naturelles, lesdites fibres naturelles étant notamment des fibres de cellulose, et qui est spécialement destiné à être mis en oeuvre dans le procédé présenté et qui comporte au moins un rouleau d'enduction et un réservoir d'enduction pour une composition liquide comportant un additif anti-feu, ledit au moins un rouleau d'enduction baignant au sein du réservoir d'enduction dans ladite composition liquide comportant l'additif anti-feu et ledit réservoir d'enduction comporte un agitateur destiné à maintenir sous une agitation constante ladite composition liquide comportant l'additif anti-feu. Dans des modalités particulières, l'agitateur est à vis d'Archimède et/ou l'agitateur et ledit au moins un rouleau d'enduction ont des axes de rotation parallèles. De préférence, la composition liquide est une composition colorante.

On mentionne une composition liquide comportant un additif anti-feu pour mise en oeuvre dans le procédé présenté et telle qu'elle comporte, pour la partie de composition liquide, au moins une résine et, éventuellement, un ou des pigments, et pour la partie additif anti-feu, du graphite et un agent de refroidissement. En particulier, l'agent de refroidissement est de la colémanite.

L'invention concerne également, en elle-même, une étape d'enduction d'un matelas de fibres, lesdites fibres étant au moins pour une partie d'entre elles des fibres naturelles, lesdites fibres naturelles étant notamment des fibres de cellulose, par une composition liquide comportant un additif anti-feu selon l'invention décrite. Dans une variante, on y rattache une étape de séchage/prise de la composition liquide comportant l'additif anti-feu qui a été enduite sur le matelas.

Grâce à l'invention, on simplifie la fabrication des éléments de couverture car on obtient en une seule opération la coloration avec la composition colorante comportant au moins un pigment et au moins une résine et la protection contre le feu puisque la composition comporte également du graphite et un agent de refroidissement qui est de la colémanite, le tout se faisant par voie humide avec enduction au rouleau. La mise en oeuvre de rouleaux permet une application contrôlée avec une certaine pression de la composition, ce qui conduit à une meilleure prise/incorporation des éléments de la composition dans le matelas de fibres, notamment des flocons ou paillettes de graphite. L'enduction au rouleau permet également d'envisager de réaliser des motifs colorés particuliers sur le matelas.

La présente invention, sans qu'elle en soit pour autant limitée, va maintenant être exemplifiée avec la description qui suit de modes de réalisation et de mise en oeuvre en relation avec :

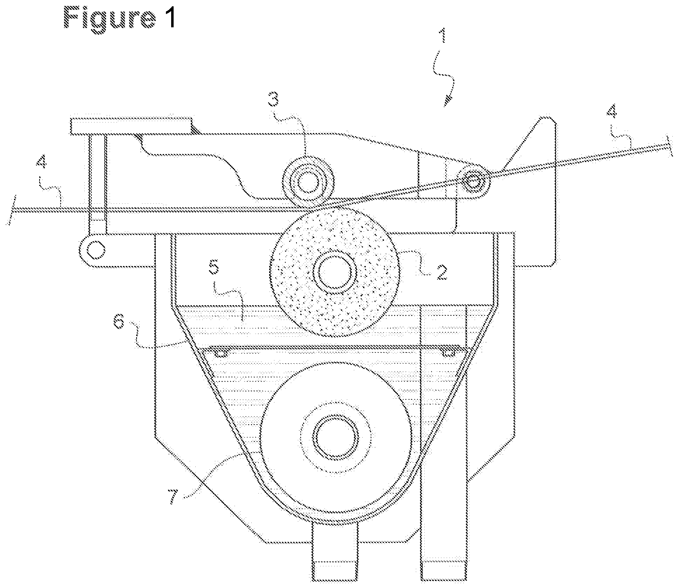

la Figure 1 qui représente un dispositif pour enduction d'un matelas de fibres naturelles qui sont ici des fibres de cellulose.

Le dispositif d'enduction 1 de la Figure 1 est spécialement configuré pour la mise en oeuvre du procédé de l'invention car il permet une enduction homogène d'une composition liquide 5 comportant un additif anti-feu grâce à rouleau d'enduction 2 qui trempe/baigne en partie dans ladite composition 5. La composition liquide 5 comportant l'additif anti-feu est contenue dans un réservoir 6 d'enduction du dispositif 1 et est maintenue sous agitation constante par un agitateur 7 afin que ladite composition reste sensiblement homogène. Les axes de rotation du rouleau d'enduction 2 et de l'agitateur 7 sont parallèles entre eux. Un contre-rouleau 3 presse le matelas 4 de fibres de cellulose contre le rouleau d'enduction 2. Des moyens de réglage et de régulation de la pression du contre-rouleau sont mis en oeuvre.

Dans cet exemple, les fibres de cellulose sont sous forme d'un matelas de fibres de cellulose continu qui défile continument entre le rouleau d'enduction 2 et le contre-rouleau 3.

La composition liquide 5 comportant l'additif anti-feu provient de préférence d'un système de stockage et/ou de préparation amont de ladite composition non représenté et le dispositif comporte des moyens de transfert et de régulation du niveau de la composition liquide 5 dans le réservoir 6 d'enduction. Parmi les moyens de réglage de la quantité de composition liquide 5 comportant l'additif anti-feu qui se dépose sur le matelas de fibres de cellulose et qui se retrouve donc dans le produit fini, on peut mentionner le réglage du niveau de la composition liquide 5 dans le réservoir 6 d'enduction faisant que le rouleau d'enduction 2 trempe plus ou moins dans la composition liquide.

Une circulation en boucle est avantageusement mise en oeuvre entre le réservoir 6 d'enduction et le système amont de stockage et/ou de préparation. Ce système amont comporte des moyens de préparation de la composition liquide 5 comportant l'additif anti-feu avec un mélangeur permettant des mélanges à des vitesses différentes. Une pompe volumétrique à basse pression est mise en oeuvre entre le système de stockage et/ou préparation et le réservoir 6 d'enduction.

Typiquement, on prépare une composition liquide 5 de type composition colorante comportant l'additif anti-feu en mélangeant tout d'abord du pigment dans de l'eau dans un mélangeur à haute vitesse de mélange. De préférence, on ajoute des agents surfactants afin de faciliter le mélange entre l'eau et le/les pigments. Ensuite, on ajoute la colémanite toujours dans le mélangeur à haute vitesse de mélange, de préférence par ajout progressif de la colémanite. Une fois ce mélange précédent réalisé, on ajoute progressivement le graphite que l'on mélange cette fois à vitesse plus faible. Ensuite, on ajoute une ou plusieurs résines compatibles que l'on mélange à cette vitesse plus faible ou à une vitesse encore plus faible. Au cours de ces phases, on ajuste, si nécessaire, la viscosité et/ou d'autres paramètres. A cette fin, on peut jouer sur les quantités des produits mis en oeuvre, notamment eau, pigment(s), résine(s) et/ou on peut ajouter d'autres produits. A noter que dans d'autres modalités de réalisation d'une composition liquide comportant l'additif anti-feu, l'ordre et/ou la manière d'incorporer au mélange les composés peuvent être différents.

La colémanite est un agent de refroidissement, c'est-à-dire que c'est une substance qui évite une trop forte élévation de chaleur du matelas de fibres lorsque ce dernier est chauffé. En effet, en lui-même, le graphite est conducteur de chaleur. Or, au cours de l'opération de séchage du matelas de fibres après enduction, le matelas est chauffé pour éliminer l'eau / l'humidité restant dans le matelas. En effet, la solution visqueuse contenant entre autres le graphite, est appliquée sur le matelas alors qu'il contient encore une certaine humidité. Ce chauffage pour séchage, qui permet également la prise/le séchage de la composition liquide d'enduction, va donc également chauffer le graphite et la température du graphite au contact du matelas de fibres risque d'entraîner un sur-chauffage de ces fibres et donc un risque d'endommagement des fibres. L'agent de refroidissement a donc pour rôle de contrôler la température au niveau du matelas de fibres grâce à la libération de molécules d'eau dans le cas d'espèce de la colémanite.

On comprend donc qu'un agent de refroidissement, dans le cadre de l'invention, peut correspondre à une substance qui, par une réaction physicochimique, provoque un abaissement de température, vaporisation de l'eau dans le cas de la colémanite, et/ou par un effet physique limite la transmission de chaleur par effet barrière et/ou de réflexion.

La composition liquide comportant l'additif anti-feu qui est enduite sur le matelas est de préférence sous forme liquide d'une fluidité déterminée pour permettre à une partie de ladite composition liquide comportant l'additif anti-feu de pouvoir diffuser au moins en partie à l'intérieur de l'épaisseur du matelas de fibres de cellulose. Ainsi, la composition liquide comportant l'additif anti-feu imprègne, au moins en partie, l'épaisseur du matelas en plus de couvrir en surface au moins une des deux faces du matelas de fibres de cellulose. De préférence, une seule des deux faces du matelas de fibres de cellulose est enduite par la composition liquide comportant l'additif anti-feu. Dans une variante de mise en oeuvre, la composition liquide comportant l'additif anti-feu peut être d'une consistance plus pâteuse avec application au couteau ou racloir sur le matelas de fibres de cellulose.

Le graphite mis en oeuvre a des gammes de tailles et formes de particules déterminées et, de préférence, on met en oeuvre du graphite sous forme de flocons ou paillettes qui restent essentiellement en surface du matelas de fibres de cellulose et qui diffusent peu dans son épaisseur.

En particulier, le graphite est choisi, notamment en forme/structure et/ou taille, ainsi que les paramètres opérationnels du procédé de réalisation des éléments de couverture, pour qu'il reste en suspension dans la composition liquide jusqu'au moment de son application et qu'il reste inerte au cours du séchage ultérieur à l'enduction et de l'imprégnation par le bitume. Il est en effet préférable qu'il n'y ait pas d'expansion du graphite avant la fin du procédé de réalisation des éléments de couverture.

Par rapport à des procédés de dépôt en phase sèche de graphite, le procédé de la présente invention peut permettre une diffusion plus ou moins importante du graphite dans l'épaisseur du matelas de fibres de cellulose si on le souhaite en modifiant la taille et/ou la forme du graphite utilisé.

Après enduction du matelas de fibres de cellulose par la composition liquide comportant l'additif anti-feu, le matelas est séché dans un four de séchage ce qui permet à la fois la prise/réticulation de la composition liquide comportant l'additif anti-feu et une élimination de l'eau/humidité pouvant encore être contenu dans le matelas. Le four de séchage est à une température comprise entre 150°C et 400°C et, de préférence, comprise entre 200°C et 300°C. En effe,tpour imprégnation par le bitume à chaud des fibres de cellulose, de préférence alors en plaques et non plus sous forme d'un matelas continu, il est souhaitable que le matelas ou les plaques soient essentiellement sèches.

En général, après enduction par la composition liquide comportant l'additif anti-feu, le matelas de fibres de cellulose est conformé au cours d'une étape de conformation du matelas pour, par exemple, réalisation d'ondulations, puis est ensuite passé dans le four de séchage. On peut cependant prévoir un moyen spécifique de séchage/prise de la composition liquide comportant l'additif anti-feu, différent du four de séchage, entre l'enduction et la conformation. Après séchage dans le four de séchage, le matelas de fibres de cellulose est découpé en plaques et ce sont ces plaques qui sont ensuite imprégnées de bitume à chaud. Jusqu'au découpage du matelas en plaques, le processus est continu, le matelas de fibres de cellulose défilant en continu pour enduction, conformation et séchage dans le four de séchage.

## Revendications

1. Procédé de réalisation d'un élément de couverture en fibres imprégné de bitume comportant une étape d'enduction d'au moins une de deux faces d'un matelas (4) de fibres, lesdites fibres étant au moins pour une partie d'entre elles des fibres naturelles, lesdites fibres naturelles étant notamment des fibres de cellulose, suivie d'une étape d'imprégnation par le bitume, l'enduction étant réalisée par une composition liquide (5),
**caractérisé en ce que** la composition liquide est une composition colorante comportant au moins un pigment et au moins une résine et **en ce qu'**on ajoute à la composition liquide (5) un additif ayant des propriétés anti-feu et comportant au moins du graphite et un agent de refroidissement qui est de la colémanite.

2. Procédé selon la revendication 1, dans lequel le graphite est en flocons ou en paillettes.

3. Procédé selon l'une quelconque des revendications précédentes, dans lequel:
- la au moins une résine est choisie parmi : les résines époxydes, les résines polyuréthanes, les résines polyurées, les résines polyurée-formaldéhydes, les résines mélamines-formaldéhydes, les résines époxyvinylesters ou les résines vinylesters, et
- le au moins un pigment est choisi parmi : les oxydes métalliques tels que l'oxyde de fer et l'oxyde de chrome.

4. Procédé selon l'une quelconque des revendications précédentes, dans lequel la quantité de résine représente de 0,5 à 3 % en poids de l'élément de couverture, la quantité de pigment représente de 0,5 à 3 % en poids de l'élément de couverture, la quantité d'agent de refroidissement représente de 1 à 7 % en poids de l'élément de couverture, et la quantité de graphite représente de 1 à 7 % en poids de l'élément de couverture.

5. Procédé selon l'une quelconque des revendications précédentes, comportant en outre une étape de séchage et de prise de la composition liquide comportant l'additif anti-feu qui a été enduite sur le matelas.

6. Procédé selon l'une quelconque des revendications précédentes, dans lequel le matelas de fibres est continu, ledit matelas étant découpé en plaques dans une étape de segmentation postérieure à l'étape d'enduction et antérieure à l'étape d'imprégnation par le bitume, l'imprégnation par le bitume s'effectuant sur des plaques individuelles.

7. Procédé selon l'une quelconque des revendications précédentes, comportant en outre une étape de conformation du matelas postérieurement à l'étape d'enduction et antérieurement à l'étape d'imprégnation par le bitume.

8. Procédé selon l'une quelconque des revendications précédentes, dans lequel la composition liquide comportant l'additif anti-feu destinée à être enduite sur le matelas est maintenue sous agitation constante par un agitateur.

9. Procédé selon la revendication 8, dans lequel l'enduction du matelas (4) avec la composition liquide comportant l'additif anti-feu est réalisée au rouleau.

10. Procédé selon la revendication 9, **caractérisé en ce qu'**on met en oeuvre au moins un rouleau d'enduction (2) et un réservoir (6) d'enduction pour la composition liquide (5) comportant l'additif anti-feu, ledit au moins un rouleau d'enduction baignant au sein du réservoir (6) d'enduction dans ladite composition liquide comportant l'additif anti-feu et **en ce que** ledit réservoir (6) d'enduction comporte ledit agitateur (7) destiné à maintenir sous une agitation constante ladite composition (5) comportant l'additif anti-feu.

## Patentansprüche

1. Verfahren zur Herstellung eines Abdeckelements aus mit Bitumen imprägnierten Fasern mit einem Schritt des Beschichtens wenigstens einer der beiden Seiten einer Fasermatte (4), wobei wenigstens ein Teil der Fasern Naturfasern sind, wobei die Naturfasern insbesondere Zellulosefasern sind, und einem darauffolgenden Schritt des Imprägnierens mit Bitumen, wobei die Beschichtung mit einer flüssigen Mischung (5) ausgeführt wird,
**dadurch gekennzeichnet, daß** die flüssige Mischung eine färbende Mischung ist, die wenigstens ein Pigment und wenigstens ein Harz aufweist, und daß man der flüssigen Mischung (5) wenigstens einen Zusatz beigibt, der feuerverhindernde Eigenschaften aufweist und der wenigstens Graphit und einen abkühlenden Stoff, und zwar Colemanit, aufweist.

2. Verfahren gemäß Anspruch 1, bei dem das Graphit in Flocken oder Pailletten vorliegt.

3. Verfahren gemäß einem der vorangehenden Ansprüche, bei dem
- das wenigstens eine Harz unter den Epoxydharzen, den Polyurethanharzen, den Polyharnstoffharzen, den Polyharnstoff-Formaldehyd-Harzen, den Melamin-Formaldehyd-Harzen, den Epoxyvinylesterharzen oder den Vinylesterharzen ausgewählt wird und
- das wenigstens eine Pigment unter den Metalloxiden, wie etwa Eisenoxid und Chromoxid, ausgewählt wird.

4. Verfahren gemäß einem der vorangehenden Ansprüche, bei dem die Menge an Harz 0,5 bis 3 Gewichts-% des Abdeckelements darstellt, die Menge an Pigment 0,5 bis 3 Gewichts-% des Abdeckelements darstellt, die Menge an abkühlendem Stoff 1 bis 7 Gewichts-% des Abdeckelements darstellt und die Menge an Graphit 1 bis 7 Gewichts-% des Abdeckelements darstellt.

5. Verfahren gemäß einem der vorangehenden Ansprüche, das außerdem einen Schritt des Trocknens und des Aushärtens der den feuerverhindernden Zusatz enthaltenden flüssigen Mischung, die auf die Matte aufgetragen worden ist, aufweist.

6. Verfahren gemäß einem der vorangehenden Ansprüche, bei dem die Fasermatte durchgehend ist, wobei die Matte in einem auf den Schritt des Beschichtens folgenden und dem Schritt des Imprägnierens mit Bitumen vorangehenden Schritt des Zerteilens in Platten zerteilt wird, wobei das Imprägnieren mit Bitumen auf den einzelnen Platten erfolgt.

7. Verfahren gemäß einem der vorangehenden Ansprüche, das außerdem einen Schritt der Formgebung der Matte nach dem Schritt des Beschichtens und vor dem Schritt des Imprägnierens mit Bitumen aufweist.

8. Verfahren gemäß einem der vorangehenden Ansprüche, bei dem die den feuerverhindernden Zusatz enthaltende flüssige Mischung, die dazu bestimmt ist, auf die Matte aufgetragen zu werden, ständig mit einer Rührvorrichtung umgerührt wird.

9. Verfahren gemäß Anspruch 8, bei dem die Beschichtung der Matte (4) mit der den feuerverhindernden Zusatz enthaltenden flüssigen Mischung mit einer Rolle ausgeführt wird.

10. Verfahren gemäß Anspruch 9, **dadurch gekennzeichnet, daß** man wenigstens eine Beschichtungsrolle (2) und einen Beschichtungstank (6) für die den feuerverhindernden Zusatz enthaltende flüssige Mischung verwendet, wobei die wenigstens eine Beschichtungsrolle in dem die den feuerverhindernden Zusatz enthaltende flüssige Mischung enthaltenden Beschichtungstank (6) eingetaucht ist, und dadurch, daß der Beschichtungstank (6) die zum ständigen Umrühren der den feuerverhindernden Zusatz enthaltenden Mischung (5) bestimmte Rührvorrichtung (7) aufweist.

## Claims

1. A method for producing a bitumen-impregnated, fibre roofing element, including a step of coating at least one of two faces of a fibre mat (4), said fibres being at least, for a part of them, natural fibres, said natural fibres being in particular cellulose fibres, followed by a step of impregnating with bitumen, the coating being carried out with a liquid composition (5),
**characterized in that** the liquid composition is a dye composition including at least one pigment and at least one resin, and **in that** it is added to the liquid composition (5) an additive having fireproof properties and including at least graphite and a cooling agent that is colemanite.

2. The method according to claim 1, wherein the graphite is in the form of scales or flakes.

3. The method according to any one of the preceding claims, wherein:
- the at least one resin is chosen among: epoxide resins, polyurethane resins, polyurea resins, polyurea-formaldehyde resins, melamine-formaldehyde resins, epoxy vinyl ester resins or vinyl ester resins, and
- the at least one pigment is chosen among: the metal oxide such as iron oxide and chromium oxide.

4. The method according to any one of the preceding claims, wherein the quantity of resin represents from 0.5 to 3 % in weight of the roofing element, the quantity of pigment represents from 0.5 to 3 % in weight of the roofing element, the quantity of cooling agent preferably represents from 1 to 7 % in weight of the roofing element, and the quantity of graphite represents from 1 to 7 % in weight of the roofing element.

5. The method according to any one of the preceding claims, further including a step of drying and setting of the liquid composition including the fireproof additive that has been coated on the mat.

6. The method according to any one of the preceding claims, wherein the fibre mat is continuous, said mat being cut into sheets in a step of segmentation posterior to the step of coating and anterior to the step of impregnation with bitumen, the impregnation with bitumen being carried out on individual sheets.

7. The method according to any one of the preceding claims, further including a step of shaping the mat after the step of coating and before the step of impregnation with bitumen.

8. The method according to any one of the preceding claims, wherein the liquid composition including the fireproof additive intended to be coated on the mat is kept under constant agitation by an agitator.

9. The method according to claim 8, wherein the coating of the mat (4) with the liquid composition including the fireproof additive is carried out with a roll.

10. The method according to claim 9, **characterized in that** it is implemented at least one coating roll (2) and one coating vessel (6) for the liquid composition (5) including the fireproof additive, said at least one coating roll soaking within the coating vessel (6) in said liquid composition including the fireproof additive and **in that** said coating vessel (6) includes said agitator (7) intended to keep under constant agitation said composition (5) including the fireproof additive.
